# EUROPÄISCHE PATENTSCHRIFT

(11) **EP 2 363 570 B1**
(45) Veröffentlichungstag und Bekanntmachung des Hinweises auf die Patenterteilung: **06.12.2017**
(21) Anmeldenummer: 10013767.8
(22) Anmeldetag: 19.10.2010
(51) Int. Cl.: E06B 9/72, E06B 9/88

(54) **Rohrmotoranordnung für eine Verdunkelungsvorrichtung**
Tubular motor assembly for a dimming device
Dispositif de moteur tubulaire pour un dispositif d'obscurcissement

(30) Priorität: 02.03.2010 DE 202010003095 U
(43) Veröffentlichungstag der Anmeldung: 07.09.2011
(73) Patentinhaber: ARCA Beteiligungen GmbH, 46414 Rhede (DE)
(72) Erfinder: Tepasse, Johannes, Dipl.-Ing., 46413 Rhede (DE)
(74) Vertreter: Gottschald, Jan

(56) Entgegenhaltungen:
- EP-A1- 0 965 724
- EP-A2- 2 133 505
- DE-A1- 3 608 988
- FR-A1- 2 869 349

## Beschreibung

Die Erfindung betrifft eine Rohrmotoranordnung für eine Verdunkelungsvorrichtung bzw. Sicherungsvorrichtung gemäß dem Oberbegriff von Anspruch 1.

Die in Rede stehende Rohrmotoranordnung lässt sich für eine Vielzahl von Verdunkelungsvorrichtungen bzw. Sicherungsvorrichtungen einsetzen. Wesentlich ist lediglich, dass die Verdunkelungsvorrichtung bzw. Sicherungsvorrichtung ein verstellbares Verschlusselement aufweist. Beispiele für ein solches verstellbares Verschlusselement sind Rolläden, Jalousien, Fensterläden, Markisen, Rolltore oder Rollvorhänge.

Die bekannte Rohrmotoranordnung (DE 20 2007 016 283 U1), von der die Erfindung ausgeht, dient in erster Linie der motorischen Verstellung eines Rolladens. Hierfür ist die Rohrmotoranordnung mit einem Antriebsmotor und einem dem Antriebsmotor nachgeschalteten Getriebe ausgestattet. Dem Antriebsmotor ist eine Antriebssteuerung mit einer Wegmessanordnung zur Ermittlung der aktuellen Position des Rolladens zugeordnet. Mit "Ermittlung der aktuellen Position" ist vorliegend gemeint, dass ein Wert als Maß für die aktuelle Position ermittelt wird, der mit einem gespeicherten Positions-Sollwert verglichen werden kann.

Die Wegmessanordnung der bekannten Rohrmotoranordnung arbeitet einerseits nach dem Prinzip eines inkrementellen Sensors und andererseits, zur "Feinmessung", jedenfalls in einer Endlage nach dem Prinzip der Zeitmessung. Entsprechend wird die bekannte Anordnung regelmäßig so ausgelegt, dass die Sensoreinrichtung im Wesentlichen digitale Sensorsignale erzeugt.

Der vorliegenden Erfindung liegt das Problem zugrunde, die bekannte Rohrmotoranordnung derart auszugestalten und weiterzubilden, dass die Wegmessanordnung insbesondere im Hinblick auf die Kollisionserfassung noch weiter optimiert wird.

Das obige Problem wird bei einer Rohrmotoranordnung gemäß dem Oberbegriff von Anspruch 1 durch die Merkmale des kennzeichnenden Teils von Anspruch 1 gelöst.

Wesentlich ist die Überlegung, dass die Sensoreinrichtung vorteilhafterweise als magnetoresistiver Sensor ausgestaltet sein kann.

Das Grundprinzip eines magnetoresistiven Sensors besteht darin, dass sich die elektrische Leitfähigkeit eines elektrischen Messleiters durch die Beaufschlagung dieses Messleiters mit einem Magnetfeld beeinflussen lässt. Dieser Effekt - magnetoresistiver Effekt (MR-Effekt) - geht auf die Lorentz-Kraft zurück. Je nach Ausrichtung des den Sensor durchdringenden Magnetfelds ergibt sich eine entsprechende Leitfähigkeit des Messleiters.

Weiterentwicklungen zu dem magnetoresistiven Effekt haben zu dem sogenannten anisotropen magnetoresistiven Effekt (AMR-Effekt) und zu dem giantmagnetoresistiven Effekt (GMR-Effekt) geführt.

Wesentlich bei allen Varianten der hier in Rede stehenden magnetoresistiven Sensoren ist die Tatsache, dass dem jeweiligen Sensor eine Sensorebene zugeordnet ist, wobei mittels des Sensors die Richtung eines Magnetfelds innerhalb der Sensorebene kontinuierlich erfassbar ist. Wird die Sensorebene also von einem Magnetfeld durchdrungen, so lässt sich mittels der Sensoreinrichtung erfassen, welche Richtung der in der Sensorebene liegende Anteil des Magnetfelds aufweist. Es handelt sich hier also um magnetoresistive Winkelsensoren.

Der vorschlagsgemäßen Lösung liegt der Grundgedanke zugrunde, eine Verstellung des Verschlusselements über den magnetoresistiven Sensor zu erfassen. Hierfür weist die Sensoreinrichtung eine verstellbare Auslöseelementanordnung mit mindestens einem Auslösemagneten auf, die in der Sensorebene stets ein Magnetfeld - Sensorfeld - erzeugt. Die Auslöseelementanordnung ist gegebenenfalls über zwischengeschaltete Elemente wie eine Wickelwelle oder dergleichen mit dem Verschlusselement gekoppelt, so dass die Verstellung des Verschlusselements die Richtung des Sensorfelds bestimmt.

Von besonderer Bedeutung ist bei der vorschlagsgemäßen Lösung die Auslegung derart, dass jede - d.h. auch eine sehr kleine - Verstellung des Verschlusselements über den gesamten Verstellbereich der Auslöseelementanordnung mit einer Veränderung der Sensorsignale einhergeht. Dies lässt sich mit einem magnetoresistiven Sensor leicht realisieren, da die Winkellage des Sensorfeldes mit einem solchen Sensor wie erläutert kontinuierlich erfassbar ist.

Mit der vorschlagsgemäßen Lösung lässt sich während der motorischen Verstellung des Verschlusselements also auf einfache Weise sicherstellen, dass kontinuierliche Sensorsignale erzeugt werden, die zu jedem Zeitpunkt die Ermittlung der Position des Verschlusselements erlauben. Interessanterweise lassen sich aus den Sensorsignalen bei der vorschlagsgemäßen Lösung aber auch Zählereignisse ableiten, die je nach Verstellrichtung ein Hoch- bzw. Herunterzählen um einen Zählschritt bewirken. Insoweit ist die Rohrmotoranordnung mit der vorschlagsgemäßen Sensoreinrichtung steuerungstechnisch kompatibel mit der im einleitenden Teil der Beschreibung angesprochenen Rohrmotoranordnung.

Der kontinuierliche Verlauf der erzeugten Sensorsignale hat einen ganz besonderen Vorteil im Hinblick auf die Kollisionserfassung insbesondere beim Abwärtslauf eines Rolladens. Dadurch, dass bei einer Verstellung kontinuierlich sich verändernde Sensorsignale vorliegen, kann umgekehrt bei fehlender Signalveränderung darauf geschlossen werden, dass das Verschlusselement stillsteht, was ggf. auf eine Kollision zurückgeht. Diese Erfassung des Stillstands des Verschlusselements ist in kürzester Zeit möglich, ohne dass eine Signalperiode oder dergleichen abgewartet werden muss. Die sofortige Erfassung und die damit verbundene Möglichkeit, entsprechend schnell auf Kollisionen reagieren zu können, ist ein wesentlicher Aspekt der vorschlagsgemäßen Lösung.

Die Ansprüche 3 bis 5 betreffen die Anordnung des Sensors einerseits und der Auslöseelementanordnung andererseits. Interessant ist dabei die Tatsache, dass mit den vorgeschlagenen Maßnahmen praktisch eine Überführung der Bewegung des Verschlusselements um die Rohrmotorachse herum auf eine in der Sensorebene stattfindenden Richtungsänderung des Sensorfelds erreicht wurde (Anspruch 3).

Die Ansprüche 6 und 7 betreffen die Ausgestaltung des magnetoresistiven Sensors mit zwei integrierten magnetoresistiven Sensorelementen, wobei es sich gemäß Anspruch 7 bewährt hat, die Sensorachsen der beiden Sensorelemente gegenüber der Rohrmotor-Querachse um den gleichen Winkelbetrag, jedoch entgegengesetzt, anzustellen.

Die Sensorachse eines in Rede stehenden Sensorelements stellt eine insbesondere in der Sensorebene liegende Referenzachse für die zu messende Winkellage des das Sensorelement durchströmenden Magnetfelds dar. Dies bedeutet, dass ein Magnetfeld, das in der Sensorebene in einem bestimmten Winkel zu der Sensorachse steht, ein diesem Winkel zugeordnetes Sensorsignale ausgibt.

Die Kollisionserfassung ist schließlich Gegenstand der Ansprüche 9 bis 12. Zunächst einmal wird gemäß Anspruch 9 vargeschlagen, den Antriebsmotor mit dem Verschlusselement über einen Freilauf antriebstechnisch zu koppeln. Es ist also im Umfange des Freilaufs möglich, dass der Antriebsmotor läuft, auch wenn das Verschlusselement, beispielsweise durch eine Kollision, blockiert wird. Diese Nichtverstellung des Verschlusselements lässt sich über den Änderungsindikator gemäß Anspruch 10 sofort erfassen. Unterschreitet der Änderungsindikator einen unteren Grenzwert, so wird gemäß Anspruch 11 eine Kollisionsroutine ausgelöst. Sofern sich das Verschlusselement nicht in einen vordefinierten, oberen Nahbereich befindet, bewirkt das Unterschreiten des unteren Grenzwerts eine sofortige Abschaltung des Antriebsmotors.

Nur wenn sich das Verschlusselement in dem vordefinierten, oberen Nahbereich befindet, wird zunächst keine Abschaltung vorgenommen, wobei die Abschaltung nachgeholt wird, wenn bis zu einem vorbestimmten Zeitpunkt kein Überschreiten eines oberen Grenzwerts durch den Änderungsindikator ermittelt wurde (Anspruch 12). Dies trägt dem Umstand Rechnung, dass im oberen Nahbereich insbesondere von Rolläden ein geringfügiges "Verhaken" des Rolladens, beispielweise durch Vereisen, nicht außergewöhnlich und tolerierbar ist. Dabei blockiert der Rolladen kurzfristig, bis die blockierende Ursache aufgebrochen ist. Dieses Aufbrechen bewirkt ein sogenanntes "Zurückschwappen" des Rolladens, was selbstredend mit einer sprunghaften Erhöhung des Änderungsindikators einhergeht. Wird das "Zurückschwappen" bis zu dem vorbestimmten Zeitpunkt nicht erfasst, so liegt offensichtlich eine schwerwiegende Blockierung des Rolladens vor, was ein unverzügliches Abschalten des Antriebsmotors erfordert.

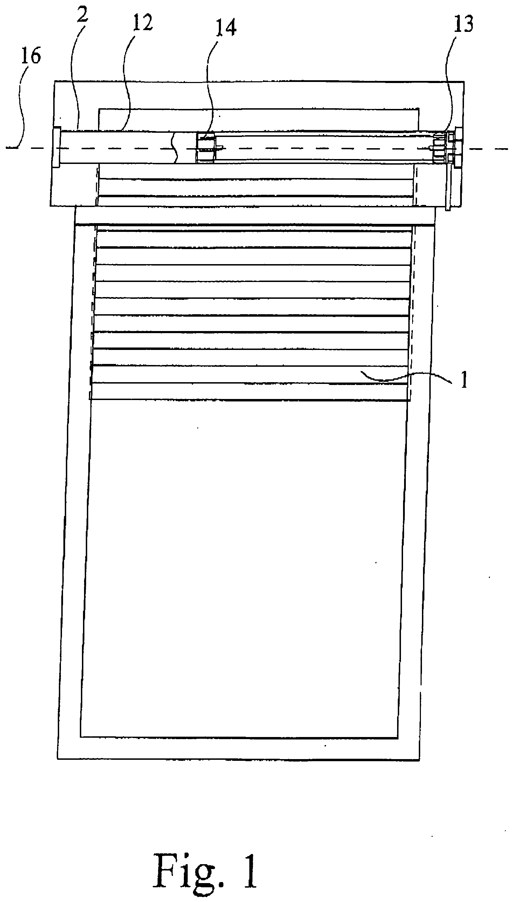

Im Folgenden wird die Erfindung anhand einer lediglich ein Ausführungsbeispiel darstellenden Zeichnung näher erläutert. In der Zeichnung zeigt
- Fig. 1: eine Verdunkelungsvorrichtung mit einer vorschlagsgemäßen Rohrmotoranordnung,
- Fig. 2: eine vorschlagsgemäße Rohrmotoranordnung im nicht eingebauten Zustand,
- Fig. 3: ausgewählte Komponenten der Rohrmotoranordnung gemäß Fig. 2 im demontierten Zustand,
- Fig. 4: in einer schematischen Ansicht eine Sensoreinrichtung einer vorschlagsgemäßen Antriebsanordnung und
- Fig. 5: die Sensoreinrichtung gemäß Fig. 4 in der dortigen Ansicht V in einer schematischen, gegenüber Fig. 4 nicht maßstabsgetreuen Darstellung.

Die vorschlagsgemäße Lösung ist in der Zeichnung anhand einer Verdunkelungsvorrichtung mit einem als Rolladen ausgestalteten verstellbaren Verschlusselement 1 gezeigt. Grundsätzlich ist die vorschlagsgemäße Antriebsanordnung für viele Varianten von Verdunkelungsvorrichtungen bzw. Sicherungsvorrichtungen anwendbar. Eine beispielhafte Auswahl wurde im einleitenden Teil der Beschreibung gegeben.

Die Rohrmotoranordnung ist mit einem rohrförmigen Gehäuse 2 ausgestattet, in dem ein Antriebsmotor 3 und vorzugsweise auch ein dem Antriebsmotor 3 nachgeschaltetes Getriebe 4 angeordnet ist bzw. sind Gegebenenfalls kann auf ein nachgeschaltetes Getriebe 4 auch verzichtet werden.

Dem Antriebsmotor 3 ist eine Antriebssteuerung 5 zugeordnet, wobei die Antriebssteuerung 5 eine Wegmessanordnung zur Ermittlung der Position des Verschlusselements 1 aufweist.

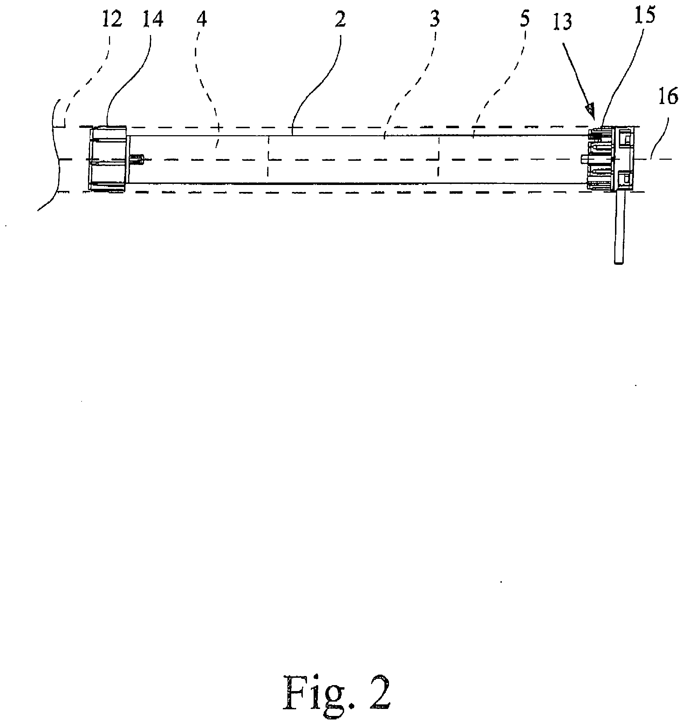

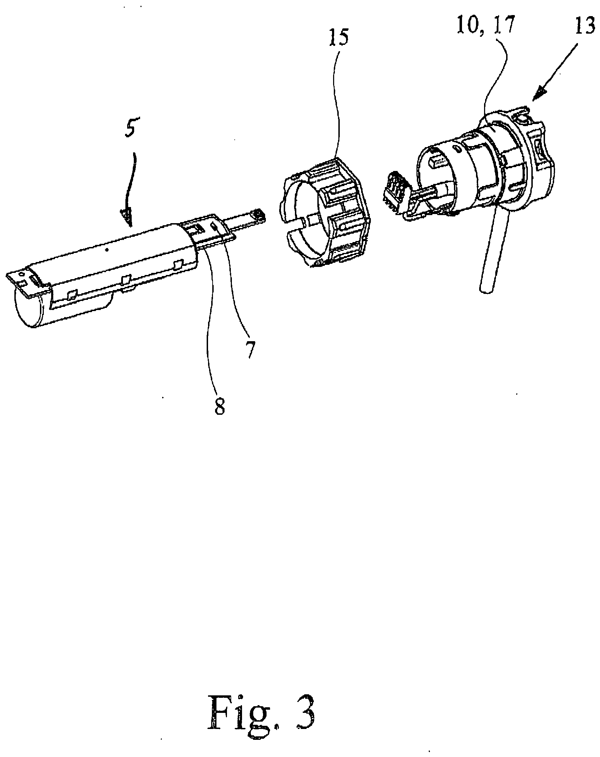

Fig. 2 zeigt die Lage der Komponenten Antriebsmotor 3, Getriebe 4 und Antriebssteuerung 5 schematisch. Fig. 3 zeigt die Einbaulage der Antriebssteuerung 5 im Rahmen einer Explosionsdarstellung. Der konstruktive Aufbau der dargestellten Antriebsanordnung wird weiter unten näher erläutert.

Die Wegmessanordnung weist zur Ermittlung der Position des Verschlusselements 1 eine Sensoreinrichtung 6 und vorzugsweise einen Positionszähler auf, wobei die Sensoreinrichtung 6 bei einer Verstellung des Verschlusselements 1 periodische Sensorsignale erzeugt, wie im Folgenden erläutert wird.

Wesentlich ist nun, dass die Sensoreinrichtung 6 einen magnetoresistiven Sensor 7 aufweist, der in den Fig. 3 bis 5 schematisch zu erkennen ist. Der Sensor 7 ist als integriertes Bauteil (IC) auf eine Platine 8 aufgelötet.

Dem magnetoresistiven Sensor 7 ist eine Sensorebene 9 zugeordnet, wobei mittels des Sensors 7 die Richtung eines Magnetfelds innerhalb der Sensorebene 9 erfassbar ist. Die Richtungserfassung betrifft wie oben erläutert nur den Richtungsanteil eines den Sensor 7 durchdringenden Magnetfelds, der in der Sensorebene 9 liegt. Üblicherweise hat das Sensorsignal eines magnetoresistiven Sensors einen sinusförmigen Verlauf über den Winkel des Magnetfelds innerhalb der Sensorebene 9.

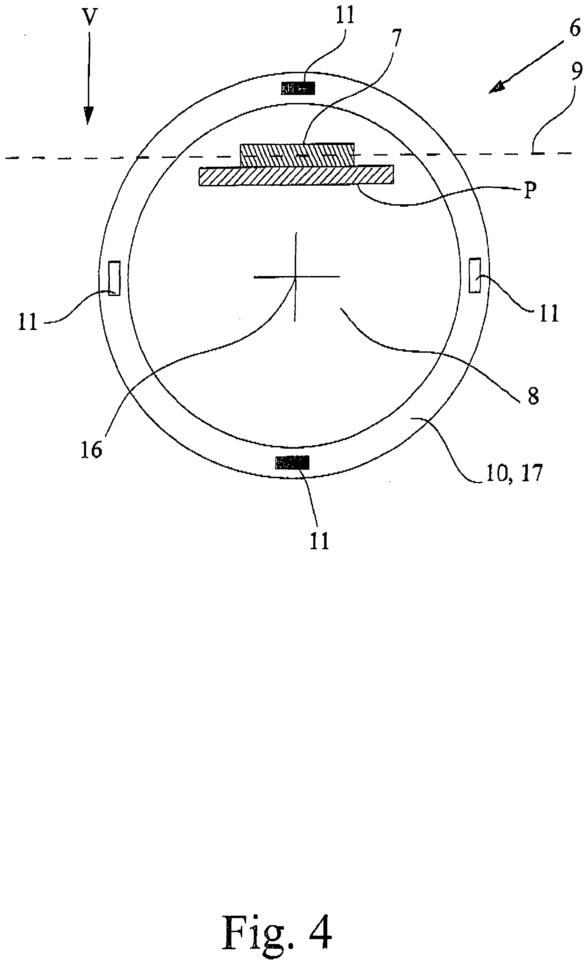

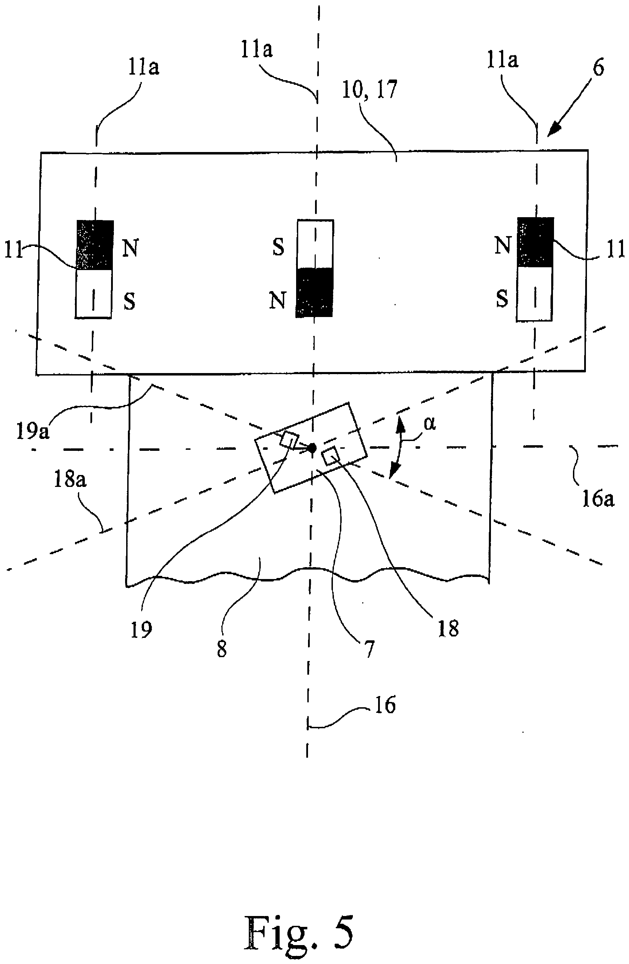

Es lässt sich der Zusammenschau der Fig. 4 und 5 entnehmen, dass die Sensoreinrichtung 6 eine verstellbare Auslöseelementanordnung 10 mit vier Auslösemagneten 11 aufweist. Grundsätzlich kann es hier ausreichen, nur einen einzigen Auslösemagneten 11 vorzusehen.

Die Auslöseelementanordnung 10 ist so ausgelegt, dass sie in der Sensorebene 9 ein Magnetfeld - Sensorfeld - erzeugt. Dabei ist die Auslöseelementanordnung 10 im montierten Zustand hier über eine Wickelwelle 12 mit dem Verschlusselement 1 gekoppelt, so dass die Verstellung des Verschlusselements 1 die Richtung des Sensorfelds innerhalb der Sensorebene 9 bestimmt.

Die Sensoreinrichtung 6 einerseits und die Auslöseelementanordnung 10 andererseits sind nun so ausgestaltet und angeordnet, dass jede Verstellung des Verschlusselements 1 mit einer Veränderung der Sensorsignale einhergeht. Die mit der kontinuierlichen Veränderung der Sensorsignale während der Verstellung des Verschlusselements 1 verbundenen Vorteile wurden im allegemeinen Teil der Beschreibung erläutert.

Die Rohrmotoranordnung weist hier und vorzugsweise einerends einen Rohrmotorkopf 13 für den Anschluss mit einem ortsfesten Gegenlager und anderenends einen Mitnehmer 14 für die antriebstechnische Kopplung mit der Wickelwelle 6 auf. Dabei ist die Rohrmotoranordnung im montierten Zustand in die Wickelwelle 12 derart eingesetzt, dass das Verschlusselement 1 mittels der Rohrmotoranordnung auf die Wickelwelle 12 aufwickelbar und von der Wickelwelle 12 abwickelbar ist.

Eine besonders vorteilhafte Ausgestaltung der Auslöseelementanordnung 10 ergibt sich aus einer Zusammenschau der Fig. 3 und 4. Hier ist es so, dass die Rohrmotoranordnung im Bereich des Rohrmotorkopfes 13 einen Adapterring 15 aufweist, der gegenüber der Rohrmotoranordnung im Übrigen, hier um die Rohrmotorachse 16 verdrehbar ist. Im montierten Zustand ist die Wickelwelle 12 gegenüber der Rohrmotoranordnung über den Adapterring 15 verdrehbar gelagert, wobei die Auslöseelementanordnung 10 dem Adapterring 15 zugeordnet ist. Die Auslöseelementanordnung 10 kann Bestandteil des Adapterring 15 oder mit dem Adapterring 15 gekoppelt sein. Hier und vorzugsweise ist dem Adapterring 15 ein Ring 17 - Magnetring 17 - zugeordnet, der bei einer Drehung des Adapterrings 15 mitbewegt wird (Fig. 3). Dem Magnetring 17 entspricht hier und vorzugsweise die Auslöseelementanordnung 10.

Es lässt sich der Darstellung in Fig. 4 entnehmen, dass der Sensor 7 derart angeordnet ist, dass die Rohrmotorachse 16 im Wesentlichen parallel versetzt zu der Sensorebene 9 verläuft.

Ferner ist es vorzugsweise so, dass der mindestens eine Auslösemagnet 11 hinsichtlich seiner Dipolachse 11a parallel zu der Rohrmotorachse 16 ausgerichtet ist. Damit lässt sich durch geeignete Auslegung leicht erreichen, dass das von dem mindestens einen Auslösemagneten 11 erzeugte, die Sensoreinrichtung 6 durchdringende Magnetfeld bezogen auf die Rohrmotorachse 16 zumindest in einer Stellung des Verschlusselements 1 zumindest im Wesentlichen radial ausgerichtet ist.

Bei einem Vorbeistreichen des Auslösemagneten 11 am Sensor 7, in Fig. 4 nach rechts, ändert der in der Sensorebene 9 liegende Anteil des Sensorfelds seine Richtung. Dieser Anteil ist in Fig. 4 anfangs im Wesentlichen rechtsgerichtet und anschließend im Wesentlichen linksgerichtet. Diese Richtungsänderung lässt sich durch den magnetoresistiven Sensor 7 über die erzeugten Sensorsignale erfassen. Diese für die Anwendung eines magnetoresistiven Sensors 7 an sich ungewöhnliche Ausrichtung der Auslösemagneten 11 hat sich in der Praxis im Hinblick auf die resultierenden Sensorsignale als besonders robust erwiesen.

Zur Klarstellung darf darauf hingewiesen werden, dass der in Fig. 4 obere Auslösemagnet 11 dem in Fig. 5 mittleren Auslösemagnet 11 und die in Fig. 4 seitlichen Auslösemagnete 11 den in Fig. 5 entsprechend seitlichen Auslösemagneten 11 entspricht.

Es lässt sich der Darstellung gemäß Fig. 4 die Tatsache entnehmen, dass der mindestens eine Auslösemagnet 11 bezogen auf die Rohrmotorachse 16 auf einem der Auslöseelementanordnung 10 zugeordneten Umfang liegt, wobei der magnetoresistive Sensor 7 in Richtung der Rohrmotorachse 16 gesehen innerhalb dieses Umfangs liegt. In dieser Blickrichtung (Fig. 4) umschließt die Auslöseelementanordnung 10 also den Sensor 7, wobei grundsätzlich ein bezogen auf die Rohrmotorachse 16 axialer Versatz zwischen den Auslösemagneten 11 und dem Sensor 7 vorgesehen ist (Fig. 5). Ohne diesen Versatz wäre die obige Ausrichtung des Sensorfelds nicht realisierbar.

Die hier und vorzugsweise vier Auslösemagnete 11 sind im Sinne einer bezogen auf die Rohrmotorachse 16 symmetrischen Ausbildung des Sensorfelds axial aneinander ausgerichtet.

Es wurde schon darauf hingewiesen, dass grundsätzlich ein einziger Auslösemagnet 11 ausreicht, um die Position des Verschlusselements 1 zu erfassen. Im Sinne einer guten Auflösung und im Hinblick auf die gewünschte Erzeugung sich kontinuierlich verändernder Sensorsignale sind aber mindestens zwei, hier vier Auslösemagnete 11 vorgesehen, die über den der Auslöseelementanordnung 10 zugeordneten Umfang um die Rohrmotorachse 16 herum verteilt, hier gleichmäßig verteilt, angeordnet sind.

Der Darstellung gemäß Fig. 4 lässt sich die Tatsache entnehmen, dass der Sensor 7 durch seinen Versatz gegenüber der Rohrmotorachse 16 im Wesentlichen ausschließlich von demjenigen Magneten 11 beeinflusst wird, der sich gerade an dem Sensor 7 vorbeibewegt. Bei der in Fig. 4 dargestellten Situation ist dies der in der oberen. Position befmdliche Magnet 11. Nachdem dieser Magnet den Sensor 7 passiert hat, kommt der benachbarte und hinsichtlich der Bewegungsrichtung nachfolgende Magnet 11 in den Detektionsbereich des Sensors 7. Um einen möglichst stetigen Verlauf der Sensorsignale zu gewährleisten, ist dieser nachfolgende Sensor 11 magnetisch entgegengesetzt zu dem vorausgehenden Auslösemagnet 11 ausgerichtet. Entsprechend ist es vorzugsweise so, dass über den der Auslöseelementanordnung 10 zugeordneten Umfang gesehen die magnetische Ausrichtung der Auslösemagnete 11 alternierend vorgesehen ist.

Eine weitere Besonderheit bei der konstruktiven Ausgestaltung der Sensoreinrichtung 6 ist die Ausrichtung des Sensors 7 im Hinblick auf die Rohrmotorachse 16. Dabei wird zunächst davon ausgegangen, dass der Sensor 7 zwei vorzugsweise integrierte magnetoresistive Sensorelemente 18, 19 mit jeweils einer insbesondere in der Sensorebene 9 liegenden Sensorachse 18a, 19a aufweist, wobei die Sensorachsen 18a, 19a um einen Versatzwinkel a zueinander winkelversetzt sind. Hier und vorzugsweise liegt dieser Versatz bei 45°, wobei die eine Sensorachse 18a die Hauptachse des Sensors 7 insgesamt bildet. Bei dem Sensor 7 handelt es sich vorzugsweise um ein integriertes Bauteil (IC).

In Fig. 5 sind die Sensorelemente 18, 19 lediglich angedeutet. Eine andere Lage der beiden Sensorelemente 18, 19 zueinander, insbesondere eine ineinander verschachtelte Anordnung, ist denkbar. Auch der bezogen auf die Sensorachse 18a gezeigte Versatz zwischen den beiden Sensorelementen 18, 19 ist lediglich im Sinne einer übersichtlichen Darstellung gewählt worden.

Bei der vorliegenden Anordnung ergeben sich für die Sensorsignale der beiden Sensorelemente 18, 19 während der Verstellung zueinander phasenverschobene, im Wesentlichen sinusförmige Verläufe. Dabei ergibt sich die Phasenverschiebung im Wesentlichen aus dem Winkelversatz zwischen den beiden Sensorelementen 18, 19. Bei geeigneter Auslegung lässt sich erreichen, dass die Sensorsignale der beiden Sensorelemente 18, 19 einerseits sinusförmig und andererseits cosinusförmig sind, was die Signalauswertung ganz erheblich vereinfacht.

Hier und vorzugsweise sind die Sensorachsen 18a, 19a der beiden Sensorelemente 18, 19 gegenüber der Rohrmotor-Querachse 16a jeweils angestellt, insbesondere um den gleichen Winkelbetrag, hier um den halben Versatzwinkelbetrag von 22,5°, angestellt. Es ergibt sich aus Fig. 5 anhand der dargestellten Sensorelementachsen 18a, 19a, dass die beiden Sensorelemente 18, 19 entgegengesetzt angestellt sind. Damit lässt sich erreichen, dass sich bei der obigen, radialen Ausrichtung des Sensorfelds Sensorsignale der beiden Sensorelemente 18, 19 mit gleicher Amplitude ausbilden. Dies ist im Hinblick auf die Weiterverarbeitung der Sensorsignale vorteilhaft.

Die vorschlagsgemäße Sensoreinrichtung 6 lässt sich in unterschiedlichen Weisen für die Ermittlung der Position des Verschlusselements 1 nutzen. Vorzugsweise stellen die Sensorsignale bei der Verstellung des Verschlusselements 1 periodische Zählereignisse für den Positionszähler bereit. Solche Zählereignisse können die Flanken, die Extremwerte oder dergleichen der oben angesprochenen, zueinander phasenverschobenen sinusförmigen Sensorsignale sein. Das Auftreten solcher Zählereignisse bewirkt im Positionszähler je nach Verstellrichtung ein Hoch- bzw. Herunterzählen um einen Zählschritt. Dies entspricht der Funktionsweise eines inkrementellen Sensors.

Die Tatsache, dass hier zwei Sensorelemente 18, 19 mit entsprechenden Sensorsignalen vorgesehen sind, erlaubt auf einfache Weise eine Richtungserkennung bei der Verstellung des Verschlusselements 1.

Um eine zusätzliche Genauigkeit für den Verstellbereich zwischen dem Auftreten zweier Zählerereignisse zu erreichen, kann zusätzlich eine Zeitmessvorrichtung vorgesehen sein, mit der, ausgelöst durch ein Zählereignis, der aktuelle zeitliche Abstand - Zeitabstand - zu eben diesem Zählereignis messbar ist. Dabei wird unterstellt, dass die Verstellgeschwindigkeit des Verschlusselements 1 im Wesentlichen konstant ist, so dass der Zeitabstand zusammen mit dem Zählerstand insgesamt ein genaues Maß für den Verstellweg des Verschlusselements 1 bereitstellt. Für Einzelheiten zu dieser Positionserfassung darf auf das im einleitenden Teil der Beschreibung angesprochene, deutsche Gebrauchsmuster 20 2007 016 283.9 vom 20. November 2007 verwiesen werden. Interessant bei der vorschlagsgemäßen Lösung ist die Tatsache, dass die obige Zeitmessung durch die Messung der Phase der Sensorsignale ersetzt werden kann. Zwischen zwei Zählereignissen liegen ja jeweils im Wesentlichen sinusförmige Signalverläufe, die Aufschluss über den aktuellen Winkelabstand zu dem jeweils letzten Zählereignis geben. Die vorschlagsgemäße Verwendung eines magnetoresistiven Sensors erlaubt also eine Steigerung der Erfassungsgenauigkeit mit außerordentlich geringem Aufwand.

Es wurde schon darauf hingewiesen, dass die vorschlagsgemäße Verwendung eines magnetoresistiven Sensors auch vorteilhaft im Hinblick auf die Kollisionserfassung ist. Hierfür ist es vorzugsweise vorgesehen, dass der Antriebsmotor 3 mit dem Verschlusselement 1 über einen Freilauf antriebstechnisch gekoppelt ist, wobei eine Blockierung des Verschlusselements 1 beispielsweise durch eine Kollision mit einem Hindernis mit einem anschließenden Durchlaufen des Freilaufs bei im Wesentlichen stillstehenden Verschlusselement 1 einhergeht. Bei einem als Rolladen ausgestalteten Verschlusselement 1 ist dies für den Abwärtslauf relevant, bei dem das Auftreffen auf ein Hindernis zunächst ein Zusammenschieben des Rolladenkörpers und ein anschließendes Durchlaufen des Freilaufs bewirkt. Der Freilauf ist hier und vorzugsweise zwischen dem Mitnehmer 14 und der dem Mitnehmer 14 zugeordneten Antriebsachse vorgesehen.
Grundsätzlich ergibt sich die Erkennung einer Kollision also daraus, dass der Antriebsmotor zwar läuft, die Wegmessanordnung beim Durchlaufen des Freilaufs allerdings kein Bewegung des Verschlußelements 1 meldet. Vor diesem Hintergrund ist es von besonderer Bedeutung, dass ein fehlender Verstellfortschritt möglichst zeitnah erfasst wird, so dass die Abschaltung des Antriebsmotors 3 rechtzeitig erfolgen kann.

Vorzugsweise ermittelt die Antriebssteuerung 5 während der Verstellung laufend einen Wert für die aktuelle Änderung der Sensorsignale bezogen auf die Zeit, der im Folgenden als "Änderungsindikator" bezeichnet wird. Eine Blockierung des Verschlusselements 1, beispielsweise durch Vereisung oder eben durch eine Kollision, bewirkt ein Unterschreiten eines unteren Grenzwerts des Änderungsindikators. Ein stoßartige Nachrücken des Verschlusselements 1, beispielsweise durch Losbrechen einer Vereisung, bewirkt entsprechend ein Überschreiten eines oberen Grenzwerts des Änderungsindikators. Ein solches stoßartiges Nachrücken wird auch als "Zurückschwappen" bezeichnet.

Für die Ermittlung des Änderungsindikators sind zahlreiche Möglichkeiten denkbar. Eine bevorzugte Möglichkeit besteht darin, dass die Änderungen eines kurzen, vorangegangenen Zeitbereichs der Sensorsignale aufaddiert werden. Es hat sich in Versuchen gezeigt, dass das Aufaddieren aller Änderungen der letzten 100 ms zu guten Ergebnissen führt. Das Aufaddieren erfolgt dabei im Rechentakt der Sensoreinrichtung 6.

Der Änderungsindikator erlaubt nun eine ganz besonders einfache Erfassung von Kollisionen. Vorzugsweise ist es nämlich so, dass die Antriebssteuerung 5 bei einem Unterschreiten des unteren Grenzwerts durch den Änderungsindikator eine Kollisionsroutine auslöst und in der Kollisionsroutine eine sofortige Abschaltung des Antriebsmotors 3 bewirkt. Damit lässt sich die Blockierung des Verschlusselements 1 weitgehend ohne Verzögerung erfassen.

Es hat sich gezeigt, dass beim Abwärtslauf von Rolläden im oberen Nahbereich oftmals eine tolerierbare, zeitweise Blockierung des Verschlusselements 1 auftritt, die beispielsweise durch Vereisung verursacht wird und die durch den Antrieb des Verschlusselements 1 aufgebrochen werden kann. Hier kommt es nach dem Durchlaufen des Freilaufs zu einer weiteren Kraftbeaufschlagung des Verschlusselements 1 in Abwärtsrichtung, was üblicherweise zu dem Lösen der Blockierung führt. Das Lösen der Blockierung ist mit einem "Zurückschwappen" des Verschlusselements 1 bei gleichzeitigem Durchlaufen des Freilaufs in entgegengesetzter Richtung verbunden. Dieses "Zurückschwappen" ist entsprechend mit einer beträchtlichen Erhöhung des Abschaltindikators verbunden.

Befindet sich das Verschlusselement 1 nun in dem obigen, vordefinierten, oberen Nahbereich, so bewirkt die Antriebssteuerung 5 beim Abwärtslauf in der Kollisionsroutine zunächst keine Abschaltung des Antriebsmotors 3. Die Abschaltung wird nur dann nachgeholt, wenn bis zu einem vorbestimmten Zeitpunkt kein Überschreiten des oberen Grenzwerts durch den Änderungsindikator, also das "Zurückschwappen", ermittelt wurde. Dieser vorbestimmte Zeitpunkt entspricht vorzugsweise dem nominellen Verlassen des oberen Nahbereichs. Damit ist gemeint, dass nach einem bestimmten Zeitpunkt zu erwarten ist, dass der obere Nahbereich tatsächlich verlassen worden ist.

Vorschlagsgemäß wird die Abschaltung des Antriebsmotors 3 im oberen Nahbereich des als Rolladen ausgestalteten Verschlusselements 1 also solange zurückgestellt, bis sichergestellt ist, dass die Blockierung des Verschlusselements 1 nicht dem normalbetriebsgemäßen Verhalten entspricht. Damit wird gewährleistet, dass die Kollisionserfassung mit anschließender Abschaltung nicht zu einer ungewünschten Behinderung des Verstellbetriebs führt.

## Patentansprüche

1. Rohrmotoranordnung für eine Verdunkelungsvorrichtung bzw. Sicherungsvorrichtung mit einem verstellbaren Verschlußelement (1) wie einem Rolladen oder dergleichen, wobei ein rohrförmiges Gehäuse (2) vorgesehen ist, in dem ein Antriebsmotor (3) angeordnet ist, wobei eine Antriebssteuerung (5) vorgesehen ist, die eine Wegmessanordnung zur Ermittlung der Position des Verschlusselements (1) aufweist, wobei die Wegmessanordnung zur Ermittlung der Position eine Sensoreinrichtung (6) aufweist, die bei einer Verstellung des Verschlusselements (1) periodische Sensorsignale erzeugt und wobei die Sensoreinrichtung (6) eine verstellbare Auslöseelementanordnung (10) mit mindestens einem Auslösemagneten (11), insbesondere mehreren Auslösemagneten (11), aufweist, wobei die Auslöseelementanordnung (10) im montierten Zustand über eine Wickelwelle (12) oder dergleichen mit dem Verschlusselement (1) gekoppelt ist, so dass die Verstellung des Verschlusselements (1) die Richtung des Sensorfelds bestimmt, **dadurch gekennzeichnet, dass** die Sensoreinrichtung (6) einen magnetoresistiven Sensor (7) aufweist, dem eine Sensorebene (9) zugeordnet ist, dass der Sensor (7) derart angeordnet ist, dass die Rohrmotorachse (16) im Wesentlichen parallel versetzt zu der Sensorebene (9) verläuft, dass mittels des Sensors (7) die Richtung eines Magnetfelds innerhalb der Sensorebene (9) erfassbar ist, dass die Auslöseelementanordnung (10) in der Sensorebene (9) ein Magnetfeld - Sensorfeld - erzeugt, und dass der Sensor (7) einerseits und die Auslöseelementanordnung (10) andererseits so ausgestaltet und angeordnet sind, dass jede Verstellung des Verschlußelements (1) mit einer Veränderung der Sensorsignale einhergeht.

2. Rohrmotoranordnung nach Anspruch 1, **dadurch gekennzeichnet, dass** einerends ein Rohrmotorkopf (13) für den Anschluss mit einem ortsfesten Gegenlager und anderenends ein Mitnehmer (14) für die antriebstechnische Kopplung mit der Wickelwelle (12) vorgesehen sind, vorzugsweise, dass die Rohrmotoranordnung im montierten Zustand in die Wickelwelle (12) derart eingesetzt ist, dass das Verschlusselement (1) mittels der Rohrmotoranordnung auf die Wickelwelle (12) aufwickelbar und von der Wickelwelle (6) abwickelbar ist, weiter vorzugsweise, dass vorzugsweise im Bereich des Rohrmotorkopfes (13) ein Adapterring (15) vorgesehen ist, der gegenüber der Rohrmotoranordnung im Übrigen verdrehbar ist und über den die Wickelwelle (12) im montierten Zustand gegenüber der Rohrmotoranordnung verdrehbar gelagert ist und dass die Auslöseelementanordnung (10) dem Adapterring (15) zugeordnet ist.

3. Rohrmotoranordnung nach Anspruch 1 oder 2, **dadurch gekennzeichnet, dass** der mindestens eine Auslösemagnet (11) hinsichtlich seiner Dipolachse (11a) parallel zu der Rohrmotorachse (16) ausgerichtet ist, vorzugsweise, dass das von dem mindestens einen Auslösemagneten (11) erzeugte Sensorfeld bezogen auf die Rohrmotorachse (16) in zumindest einer Stellung des Verschlusselements (1) im Wesentlichen radial ausgerichtet ist, vorzugsweise, dass der Sensor (7) bezogen auf die Rohrmotorachse (16) axial versetzt zu dem mindestens einen Auslösemagneten (11) angeordnet ist.

4. Rohrmotoranordnung nach einem der vorhergehenden Ansprüche, **dadurch gekennzeichnet, dass** der mindestens eine Auslösemagnet (11) bezogen auf die Rohrmotorachse (16) auf einem der Auslöseelementanordnung (10) zugeordneten Umfang liegt und dass der magnetoresistive Sensor (7) in Richtung der Rohrmotorachse (16) gesehen innerhalb dieses Umfangs liegt.

5. Rohrmotoranordnung nach Anspruch 4, **dadurch gekennzeichnet, dass** die Auslöseelementanordnung (10) mindestens zwei, vorzugsweise vier Auslösemagnete (11) aufweist und dass die Auslösemagnete (11) über den der Auslöseelementanordnung (10) zugeordneten Umfang um die Rohrmotorachse (16) herum verteilt, insbesondere gleichmäßig verteilt, angeordnet sind.

6. Rohrmotoranordnung nach einem der vorhergehenden Ansprüche, **dadurch gekennzeichnet, dass** der Sensor (7) zwei vorzugsweise integrierte magnetoresistive Sensorelemente (18, 19) mit jeweils einer insbesondere in der Sensorebene (9) liegenden Sensorachse (18a, 19a) aufweist, wobei die Sensorachsen (18a, 19a) um einen Versatzwinkel (α) zueinander winkelversetzt, insbesondere um 45° winkelversetzt, ausgerichtet sind, vorzugsweise, dass die Sensorsignale der Sensorelemente (18, 19) als Funktion der Winkellage des Sensorfelds zueinander phasenverschoben im Wesentlichen sinusförmig verlaufen.

7. Rohrmotoranordnung nach einem der vorhergehenden Ansprüche, **dadurch gekennzeichnet, dass** die Sensorachsen (18a, 19a) der beiden Sensorelemente (18, 19) gegenüber der Rohrmotor-Querachse (16a) jeweils angestellt, vorzugsweise um den gleichen Winkelbetrag, insbesondere um den halben Versatzwinkelbetrag (α), jedoch entgegengesetzt, angestellt sind.

8. Rohrmotoranordnung nach einem der vorhergehenden Ansprüche, **dadurch gekennzeichnet, dass** die Sensorsignale bei der Verstellung des Verschlusselements (1) periodische Zählereignisse für einen Positionszähler bereitstellen und dass das Auftreten eines Zählereignisses im Positionszähler je nach Verstellrichtung ein Hoch- bzw. Herunterzählen um einen Zählschritt bewirkt.

9. Rohrmotoranordnung nach einem der vorhergehenden Ansprüche, **dadurch gekennzeichnet, dass** der Antriebsmotor (3) mit dem Verschlußelement (1) über einen Freilauf antriebstechnisch gekoppelt ist, vorzugsweise, dass eine Blockierung des Verschlusselements (1) beispielsweise durch eine Kollision mit einem Hindernis mit einem anschließenden Durchlaufen des Freilaufs bei im Wesentlichen stillstehenden Verschlusselement (1) einhergeht.

10. Rohrmotoranordnung nach einem der vorhergehenden Ansprüche, **dadurch gekennzeichnet, dass** die Antriebssteuerung (5) während der Verstellung laufend einen Wert - Änderungsindikator - für die aktuelle Änderung der Sensorsignale bezogen auf die Zeit ermittelt und dass eine Blockierung des Verschlusselements (1), beispielsweise durch Vereisung oder durch eine Kollision, ein Unterschreiten eines unteren Grenzwerts des Änderungsindikators bewirkt und dass ein stoßartiges Nachrücken des Verschlusselements (1), beispielsweise durch Losbrechen einer Vereisung, ein Überschreiten eines oberen Grenzwerts des Änderungsindikators bewirkt.

11. Rohrmotoranordnung nach Anspruch 10, **dadurch gekennzeichnet, dass** die Antriebssteuerung (5) bei einem Unterschreiten des unteren Grenzwerts durch den Änderungsindikator eine Kollisionsroutine auslöst und in der Kollisionsroutine gegebenenfalls in Abhängigkeit von der Position des Verschlusselements (1) eine sofortige Abschaltung des Antriebsmotors (3) bewirkt.

12. Rohrmotoranordnung nach Anspruch 10 oder 11, **dadurch gekennzeichnet, dass** die Antriebssteuerung (5) beim Abwärtslauf in der Kollisionsroutine zunächst keine Abschaltung des Antriebsmotors (3) bewirkt, sofern sich das Verschlußelement (1) in einem vordefinierten, oberen Nahbereich befindet und die Abschaltung nur dann nachholt, wenn bis zu einem vorbestimmten Zeitpunkt, insbesondere dem nominellen Verlassen des oberen Nahbereichs, kein Überschreiten des oberen Grenzwerts durch den Änderungsindikator ermittelt wurde.

## Claims

1. Tubular motor assembly for a shading device or a securing device with an adjustable closure element (1) such as a roller shutter or the like, wherein a tubular housing (2) is provided, in which a drive motor (3) is arranged, wherein a drive controller (5) is provided, which has a displacement measuring assembly for ascertaining the position of the closure element (1), wherein, for ascertaining the position, the displacement measuring assembly has a sensor device (6), which generates periodic sensor signals when there is an adjustment of the closure element (1), and wherein the sensor device (6) has an adjustable triggering element assembly (10) with at least one triggering magnet (11), in particular a number of triggering magnets (11), wherein the triggering element assembly (10) in the fitted state is coupled with the closure element (1) by way of a winding shaft (12) or the like, so that the adjustment of the closure element (1) determines the direction of the sensor field, **characterized in that** the sensor device (6) has a magnetoresistive sensor (7), to which a sensor plane (9) is assigned, **in that** the sensor (7) is arranged in such a way that the tubular motor axis (16) runs offset substantially parallel to the sensor plane (9), **in that** the direction of a magnetic field within the sensor plane (9) can be sensed by means of the sensor (7), **in that** the triggering element assembly (10) generates a magnetic field - sensor field - in the sensor plane (9), and **in that** the sensor (7) on the one hand and the triggering element assembly (10) on the other hand are designed and arranged in such a way that each adjustment of the closure element (1) is accompanied by a change in the sensor signals.

2. Tubular motor assembly according to Claim 1, **characterized in that** at one end a tubular motor head (13) for connection to a fixed counter bearing and at the other end a driver (14) for the coupling in drive terms with the winding shaft (12) are provided, preferably **in that** the tubular motor assembly in the fitted state is inserted in the winding shaft (12) in such a way that the closure element (1) can be wound up onto the winding shaft (12) by means of the tubular motor assembly and can be unwound from the winding shaft (6), more preferably **in that** an adapter ring (15) is preferably provided in the area of the tubular motor head (13), is moreover rotatable with respect to the tubular motor assembly and acts as a means by which the winding shaft (12) in the fitted state is mounted rotatably with respect to the tubular motor assembly and **in that** the triggering element assembly (10) is assigned to the adapter ring (15).

3. Tubular motor assembly according to Claim 1 or 2, **characterized in that** the at least one triggering magnet (11) is aligned with respect to its dipole axis (11a) parallel to the tubular motor axis (16), preferably **in that** the sensor field generated by the at least one triggering magnet (11) is aligned substantially radially with respect to the tubular motor axis (16) in at least one position of the closure element (1), preferably **in that** the sensor (7) is arranged axially offset in relation to the at least one triggering magnet (11) with respect to the tubular motor axis (16).

4. Tubular motor assembly according to one of the preceding claims, **characterized in that** the at least one triggering magnet (11) lies on a circumference assigned to the triggering element assembly (10) with respect to the tubular motor axis (16) and **in that** the magnetoresistive sensor (7) lies within this circumference when seen in the direction of the tubular motor axis (16).

5. Tubular motor assembly according to Claim 4, **characterized in that** the triggering element assembly (10) has at least two, preferably four, triggering magnets (11) and **in that** the triggering magnets (11) are arranged distributed, in particular uniformly distributed, over the circumference assigned to the triggering element assembly (10) around the tubular motor axis (16).

6. Tubular motor assembly according to one of the preceding claims, **characterized in that** the sensor (7) has two preferably integrated magnetoresistive sensor elements (18, 19) with in each case a sensor axis (18a, 19a) lying in particular in the sensor plane (9), wherein the sensor axes (18a, 19a) are aligned angularly offset in relation to one another by an offset angle (α), in particular angularly offset by 45°, preferably **in that** the sensor signals of the sensor elements (18, 19) are phase-shifted in relation to one another with a substantially sinusoidal waveform as a function of the angular position of the sensor field.

7. Tubular motor assembly according to one of the preceding claims, **characterized in that** the sensor axes (18a, 19a) of the two sensor elements (18, 19) are respectively set with respect to the tubular motor transverse axis (16a), preferably set by the same angular amount, in particular by half the offset angle (α), but oppositely.

8. Tubular motor assembly according to one of the preceding claims, **characterized in that** the sensor signals provide periodic counting events for a position counter during the adjustment of the closure element (1) and **in that** the occurrence of a counting event in the position counter brings about an incrementation or decrementation by one counting step, depending on the adjustment.

9. Tubular motor assembly according to one of the preceding claims, **characterized in that** the drive motor (3) is coupled in drive terms with the closure element (1) by way of a freewheeling mechanism, preferably **in that** a blocking of the closure element (1), for example due to a collision with an obstacle, is accompanied by a subsequent running through of the freewheeling mechanism with the closure element (1) substantially at a standstill.

10. Tubular motor assembly according to one of the preceding claims, **characterized in that** during the adjustment the drive controller (5) is continually ascertaining a value - change indicator - for the current change of the sensor signals with respect to time and **in that** a blocking of the closure element (1), for example due to icing or due to a collision, has the effect that the change indicator goes below a lower limit value and **in that** an abrupt shifting of the closure element (1), for example due to icing breaking free, has the effect that the change indicator goes above an upper limit value.

11. Tubular motor assembly according to Claim 10, **characterized in that**, when the change indicator goes below the lower limit value, the drive controller (5) initiates a collision routine and in the collision routine brings about an immediate shutdown of the drive motor (3), possibly in dependence on the position of the closure element (1).

12. Tubular motor assembly according to Claim 10 or 11, **characterized in that**, when running downwards, the drive controller (5) initially does not bring about a shutdown of the drive motor (3) in the collision routine as long as the closure element (1) is in a predefined, upper near area, and only subsequently performs the shutdown if up to a predetermined point in time, in particular the nominal leaving of the upper near area, no instance of the change indicator going above the upper limit value has been ascertained .

## Revendications

1. Dispositif de moteur tubulaire pour un dispositif d'obscurcissement ou un dispositif de sécurité avec un élément de fermeture réglable (1) comme un volet roulant ou analogue, dans lequel il est prévu un boîtier tubulaire (2), dans lequel est disposé un moteur d'entraînement (3), dans lequel il est prévu une commande d'entraînement (5) qui présente un dispositif de mesure de chemin pour la détermination de la position de l'élément de fermeture (1), dans lequel le dispositif de mesure de chemin pour la détermination de la position présente un dispositif de capteur (6), qui lors d'un déplacement de l'élément de fermeture (1) produit des signaux de capteur périodiques et dans lequel le dispositif de capteur (6) présente un dispositif d'élément de déclenchement réglable (10) avec au moins un aimant de déclenchement (11), en particulier plusieurs aimants de déclenchement (11), dans lequel le dispositif d'élément de déclenchement (10) est couplé dans l'état monté à l'élément de fermeture (1) au moyen d'un arbre d'enroulement (12) ou analogue, de telle manière que le déplacement de l'élément de fermeture (1) détermine la direction du champ du capteur, **caractérisé en ce que** le dispositif de capteur (6) présente un capteur magnéto-résistif (7), auquel un plan de capteur (9) est associé, **en ce que** le capteur (7) est disposé de telle manière que l'axe de moteur tubulaire (16) s'étende de façon décalée essentiellement parallèlement au plan de capteur (9), **en ce que** la direction d'un champ magnétique à l'intérieur du plan de capteur peut être détectée au moyen du capteur (7), **en ce que** le dispositif d'élément de déclenchement (10) produit dans le plan de capteur (9) un champ magnétique - champ de capteur - et **en ce que** le capteur (7) d'une part et le dispositif d'élément de déclenchement (10) d'autre part sont configurés et disposés de telle manière que chaque déplacement de l'élément de fermeture (1) aille de pair avec une variation des signaux de capteur.

2. Dispositif de moteur tubulaire selon la revendication 1, **caractérisé en ce qu'**il est prévu à une extrémité une tête de moteur tubulaire (13) pour le raccordement à un contre-appui fixe et à l'autre extrémité un entraîneur (14) pour le couplage d'entraînement avec l'arbre d'enroulement (12), de préférence **en ce que** le dispositif de moteur tubulaire est à l'état monté inséré dans l'arbre d'enroulement (12), de telle manière que l'élément de fermeture (1) puisse être enroulé sur l'arbre d'enroulement (12) et déroulé de l'arbre d'enroulement (6) au moyen du dispositif de moteur tubulaire, de préférence encore **en ce qu'**il est prévu de préférence dans la région de la tête de moteur tubulaire (13) une bague d'adaptateur (15), qui peut par ailleurs tourner par rapport au dispositif de moteur tubulaire et par laquelle l'arbre d'enroulement (12) peut dans l'état monté tourner par rapport au dispositif de moteur tubulaire et **en ce que** le dispositif d'élément de déclenchement (10) est associé à la bague d'adaptateur (15).

3. Dispositif de moteur tubulaire selon la revendication 1 ou 2, **caractérisé en ce que** ledit au moins un aimant de déclenchement (11) est orienté, au niveau de son axe dipolaire (11a), parallèlement à l'axe de moteur tubulaire (16), de préférence **en ce que** le champ de capteur produit par ledit au moins un aimant de déclenchement (11) est orienté essentiellement radialement par rapport à l'axe de moteur tubulaire (16) dans au moins une position de l'élément de fermeture (1), de préférence **en ce que** le capteur (7) est disposé en décalage axial par rapport à l'axe de moteur tubulaire (16) vers ledit au moins un aimant de déclenchement (11).

4. Dispositif de moteur tubulaire selon l'une quelconque des revendications précédentes, **caractérisé en ce que** ledit au moins un aimant de déclenchement (11) est situé par rapport à l'axe de moteur tubulaire (16) sur un périmètre associé au dispositif d'élément de déclenchement (10) et **en ce que** le capteur magnéto-résistif (7), considéré en direction de l'axe de moteur tubulaire (16), est situé à l'intérieur de ce périmètre.

5. Dispositif de moteur tubulaire selon la revendication 4, **caractérisé en ce que** le dispositif d'élément de déclenchement (10) présente au moins deux, de préférence quatre aimants de déclenchement (11) et **en ce que** les aimants de déclenchement (11) sont disposés de façon répartie, en particulier de façon uniformément répartie, autour de l'axe de moteur tubulaire (16) sur le périmètre associé au dispositif d'élément de déclenchement (10).

6. Dispositif de moteur tubulaire selon l'une quelconque des revendications précédentes, **caractérisé en ce que** le capteur (7) présente deux éléments de capteur magnéto-résistifs (18, 19) de préférence intégrés avec chacun un axe de capteur (18a, 19a) situé en particulier dans le plan de capteur (9), dans lequel les axes de capteur (18a, 19a) sont angulairement décalés l'un par rapport à l'autre d'un angle de décalage (α), en particulier sont angulairement décalés de 45°, de préférence **en ce que** les signaux de capteur des éléments de capteur (18, 19) sont de forme essentiellement sinusoïdale en décalage de phase l'un par rapport à l'autre en fonction de la position angulaire du champ de capteur.

7. Dispositif de moteur tubulaire selon l'une quelconque des revendications précédentes, **caractérisé en ce que** les axes de capteur (18a, 19a) des deux éléments de capteur (18, 19) sont respectivement inclinés par rapport à l'axe transversal de moteur tubulaire (16a), et sont de préférence inclinés de la même valeur angulaire, cependant en sens opposé, en particulier de la moitié de l'angle de décalage (α).

8. Dispositif de moteur tubulaire selon l'une quelconque des revendications précédentes, **caractérisé en ce que** les signaux de capteur fournissent lors du déplacement de l'élément de fermeture (1) des événements de comptage périodiques pour un compteur de position et **en ce que** la survenance d'un événement de comptage dans le compteur de position provoque selon le sens du déplacement une augmentation ou une diminution d'un pas de comptage.

9. Dispositif de moteur tubulaire selon l'une quelconque des revendications précédentes, **caractérisé en ce que** le moteur d'entraînement (3) est couplé en entraînement à l'élément de fermeture (1) au moyen d'une roue libre, de préférence **en ce qu'**un blocage de l'élément de fermeture (1) par exemple par une collision avec un obstacle va de pair avec une poursuite de la rotation de la roue libre avec l'élément de fermeture (1) essentiellement immobile.

10. Dispositif de moteur tubulaire selon l'une quelconque des revendications précédentes, **caractérisé en ce que** la commande d'entraînement (5) détermine en continu pendant le déplacement une valeur - indicateur de variation - pour la variation actuelle des signaux de capteur par rapport au temps et **en ce qu'**un blocage de l'élément de fermeture (1), par exemple par givrage ou par une collision, provoque un franchissement à la baisse d'une valeur limite inférieure de l'indicateur de variation et **en ce qu'**une remise en mouvement brusque de l'élément de fermeture (1), par exemple par le bris d'un givrage, provoque un franchissement à la hausse d'une valeur limite supérieure de l'indicateur de variation.

11. Dispositif de moteur tubulaire selon la revendication 10, **caractérisé en ce que** la commande d'entraînement (5) déclenche une routine de collision lors d'un franchissement à la baisse de la valeur limite inférieure de l'indicateur de variation et provoque dans la routine de collision éventuellement une coupure immédiate du moteur d'entraînement (3) en fonction de la position de l'élément de fermeture (1).

12. Dispositif de moteur tubulaire selon la revendication 10 ou 11, **caractérisé en ce que** la commande d'entraînement (5) lors de la descente ne provoque d'abord dans la routine de collision pas de coupure du moteur d'entraînement (3), dans la mesure où l'élément de fermeture (1) se trouve dans une zone proche prédéfinie et ne revient à la coupure que si, jusqu'à un instant prédéterminé, en particulier la sortie nominale de la zone proche, aucune franchissement à la hausse de la valeur limite supérieure par l'indicateur de variation n'a été déterminé.
